# EUROPEAN PATENT APPLICATION

(11) **EP 2 466 884 A1**
(43) Date of publication of application: **20.06.2012**
(21) Application number: 10853502.2
(22) Date of filing: 19.10.2010
(51) Int. Cl.: H04N 7/14

(54) **METHOD AND DEVICE FOR PROTECTING USER PRIVACY DURING VIDEO TELEPHONE COMMUNICATION**

(30) Priority: 21.06.2010 CN 201010204226
(71) Applicant: ZTE Corporation, Shenzhen, Guangdong 518057 (CN)
(72) Inventor: XUE, Tao, Shenzhen Guangdong 518057 (CN)
(74) Representative: Manitz, Gerhart
(86) International application number: PCT/CN2010/077855
(87) International publication number: WO 2011/160363

(57) **Abstract**

A method and device for protecting user privacy during video telephone communication are disclosed. The device includes a setting module, a detection module, a timing module, a sending module and a control module, wherein the setting module is configured to set the indication information of the video telephone and the time length of a timer; the detection module is configured to detect the operation state of a video telephone user terminal; the timing module is configured to count; the sending module is configured to send the indication information to ambient environment; and the control module is configured to read the time length of the timer and the indication information, which are set by the setting module, according to the operation state of the terminal detected by the detection module, and then control the timing of the timing module according to the read time length of the timer, and initiate the sending module to send the read indication information. The present invention enables that the surrounding people can be reminded to avoid the possibility of being imaged during the video telephone communication, and the present invention can be applied to all kinds of terminals only with an appropriate modification on the software of the terminals.

## Description

### Technical Field

The present invention relates to the measure for protecting users' privacy, and more especially, to a method and a device for protecting users' privacy in a videophone call.

### Background of the Related Art

The videophone belongs to the category of the multimedia communication, and it is a video conferencing system widely used in application fields to make people see each other in a video call, and it is not only applicable to the family life, but also extensively used in a plurality of fields of different industries, such as various business activities, remote teaching, security monitoring, hospital nursing, medical diagnostics, scientific investigations and so on, so that the videophone has a very broad market prospect.

In the course of using the videophone, the case of infringing others' privacy often appears. For example, during a videophone call in public, it is prone to send images of people around photographed in the interface of the videophone call, and if people around are photographed by the user without being aware of it, these people's privacy is violated. In some countries and regions, photographing or videotaping other people without prompt is illegal. So far, there is not a corresponding method to prompt other users to avoid being unwittingly photographed in the videophone call.

In order to solve the aforementioned problem, the best method is to effectively prompt people around that a videophone call is either imminent before the videophone call or ongoing during the videophone call and these people around might be photographed, therefore withdraw voluntarily, which is helpful to improving the usability of mobile terminals in 3G and the customer experience greatly.

### Summary of the Invention

The purpose of the present invention is to provide a device for protecting users' privacy in a videophone call, in order to resolve the problem of not giving effective prompts to surrounding people that the videophone call is either imminent or ongoing in the videophone call.

Another purpose of the present invention is to provide a method for protecting users' privacy in a videophone call, in order to resolve the problem of not giving effective prompts to surrounding people that the videophone call is either imminent or ongoing in the videophone call.

According to one aspect of the present invention, a device for protecting users' privacy in a videophone call is provided, and the device comprises:
a setting module, which is configured to configure prompt information of videophone and duration of a timer;
a detecting module, which is configured to detect a terminal working state of a videophone user in real time;
a timing module, which is configured to perform timing;
a transmitting module, which is configured to transmit the prompt information;
a control module, which is configured to read the duration of the timer and the prompt information set by the setting module according to the terminal working state detected by the detecting module, then to control timing of the timing module according to the read duration of the timer, and to start the transmitting module to transmit the read prompt information.

In the device of the present invention, the prompt information of videophone set by the setting module might comprise prompt information that the videophone call is imminent and prompt information that the videophone call is ongoing. The terminal working state of the videophone user might comprise: a called user terminal being in a ringing state, a calling user terminal being in a state of playing ring-back tone; the calling user terminal and the called user terminal being respectively in a state before opening logical audio and video channels; and the calling user terminal and the called user terminal being in a state of transmitting a local real-time audio and video currently. The timing module might comprise: a single timing sub-module, which is configured to make the calling user terminal and the called user terminal transmit the local real-time audio and video to each other after a delay of T0 from the beginning of the videophone call, when the detecting module detects that the calling user terminal and the called user terminal are respectively in the state before opening logical audio and video channels and the control module controls the timing module to start timing; and a cycle timing sub-module, which is configured to make the calling user terminal and the called user terminal transmit the prompt information of ongoing videophone call to surroundings every T1 time in the videophone call, when the detecting module detects that the calling user terminal and the called user terminal are in the state of transmitting local real-time audio and video currently and the control module controls the timing module to start timing.

According to another aspect of the present invention, a method for protecting users' privacy in a videophone call is provided, and the method comprises the following steps:
configuring prompt information of videophone and duration of a timer;
detecting a terminal working state of videophone user in real time;
reading the duration of the timer and the prompt information according to the detected terminal working state, then performing timing according to the read duation of the timer, and transmitting the read prompt information.

In the method of the present invention, the prompt information of the videophone might comprise prompt information that the videophone call is imminent and prompt information that the videophone call is ongoing. The step of reading the duration of the timer and the prompt information according to the detected terminal working state and then performing timing according to the read duration of the timer and transmitting the read prompt information, might comprise: reading and transmitting the prompt information that the videophone call is imminent when detecting that the called user terminal is in the ringing state and the calling user terminal is in the state of playing ring-back tone; reading and transmitting the prompt information that the videophone call is imminent when detecting that the calling user terminal and the called user terminal are respectively in the state before opening logical audio and video channels, and meanwhile reading the delay of T0 and starting timing, and transmitting any data other than the local real-time audio and video to each other within the delay of T0; and reading and transmitting the prompt information that the videophone call is ongoing when detecting that the calling user terminal and the called user terminal are in the state of transmitting the local real-time audio and video, and meanwhile reading an interval of T1 and performing timing, and transmitting the prompt information that the videophone call is ongoing to the surroundings at the interval of T1. The step of transmitting any data other than the local real-time audio and video to each other within the delay of T0 comprises: within the delay of T0, not transmitting the local audio and video; or, within the delay of T0, closing the local audio and transmitting an alternative image to each other; or, within the delay of T0, transmitting an alternative audio, or an alternative video, or an alternative audio and video, to each other.

Compared with the existing technology, the beneficial effect of the present invention is: the present invention achieves prompting the surrounding people to avoid the possibility of being photographed in the videophone call, and only the software of the terminal is needed to be modified appropriately, thus it can be applicable to various types of terminals.

### Brief Description of Drawings

FIG. 1 is an illustration of the module composition of a device for protecting users' privacy in a videophone call in accordance with the present invention;
FIG. 2 is a composition diagram of a timing module in accordance with the present invention;
FIG. 3 is a logical flow chart of a method for protecting users' privacy in a videophone call in accordance with the present invention;
FIG. 4 is a flow chart of a videophone call applying the method for protecting users' privacy in accordance with an embodiment of the present invention;
FIG. 5 is a logical flow chart of the called user terminal being in the ringing state, and the calling user terminal being in the state of playing ring-back tone, in accordance with an embodiment of the present invention;
FIG. 6 is a logical flow chart of the calling user terminal and the called user terminal being respectively in the state before opening the logical audio and video channels in accordance with an embodiment of the present invention;
FIG. 7 is a logical flow chart of the calling user terminal and the called user terminal being in the state of transmitting the local real-time audio and video currently in accordance with an embodiment of the present invention.

### Preferred Embodiments of the Present Invention

The present invention will be illustrated in further detail in combination with the accompanying figures and the preferred embodiments. It should be understood that the preferred embodiments described in the following are only used to illustrate and explain the present invention rather than restrict the present invention.

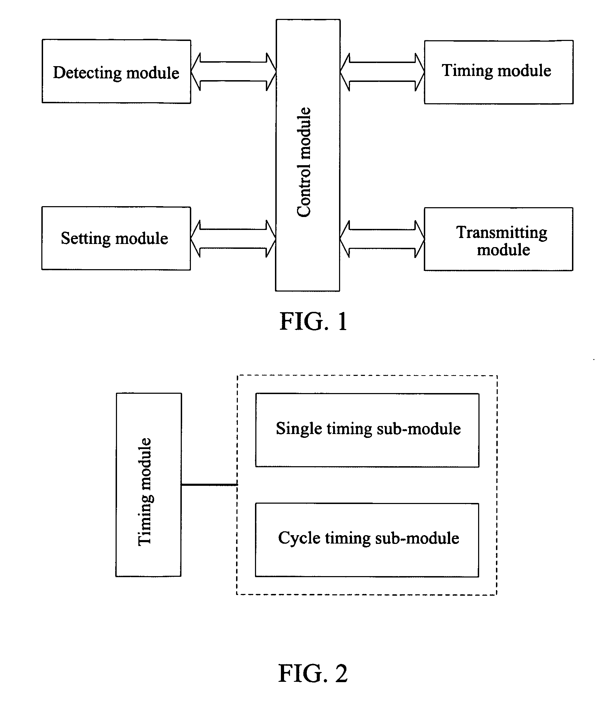

FIG. 1 illustrates the module composition of a device for protecting users' privacy in a videophone call in accordance with the present invention, as shown in FIG. 1, the device is composed of five basic modules, that is, a setting module, a detecting module, a transmitting module, a timing module and a control module.

The setting module is configured to configure the prompt information of the videophone and the duration of a timer.

The configurations of prompt information comprise the configurations of the prompt mode and prompt contents. The prompt mode might be the sound prompt, the light prompt, the sound and light prompt and so on, wherein the sound prompt comprises an electronic tone, alarm tone, voice tone, music and so on, and these sound prompts might be the default settings of the terminal or the settings selected or deleted by users through customization; the light prompt comprises the LED light or other lights on the mobile phone flashing or lighted, the internal and external screens of the mobile phone flashing, lighted or switching multiple colors, the keypad backlight of mobile phone flashing, lighted or switching multiple colors, the speedlight on mobile phone flashing or lighted, and so on, and these flashings can be made at a certain interval or irregularly.

For the configuration of the prompt contents, the sound and light prompts can be used independently or in combination, however, the sound and light prompts should distinguish between the imminent videophone call and the ongoing videophone call.

The configuration of the duration of the timer comprises the delay of T0 when the videophone call is started and the interval of T1 at which the prompt information of the ongoing videophone call is transmitted to the surroundings in the videophone call.

The detecting module is configured to detect the terminal working state of the videophone users in real time.

The terminal working states of the user comprises: the called user terminal being in the ringing state, the calling user terminal being in the state of playing ring-back tone; the calling user terminal and the called user terminal being respectively in the state before opening logical audio and video channels; the calling user terminal and the called user terminal being in the state of transmitting the local real-time audio and video currently.

When the called user terminal is in the ringing state and the calling user terminal is in the state of playing ring-back tone, the calling user terminal and the called user terminal will transmit the prompt information that the videophone call is imminent to the surroundings.

When the calling user terminal and the called user terminal are respectively in the state before opening the logical audio and video channels, the calling user terminal and the called user terminal will transmit the prompt information that the videophone call is imminent to the surroundings, and when the calling user terminal and the called user terminal open the logical audio and video channels, the calling user terminal and the called user terminal will transmit the local real-time audio and video to each other after a delay of T0.

Within the delay of T0, the ways of not transmitting the local real-time audio and video comprise: not transmitting the local real-time audio and video; closing the local audio, and transmitting the alternative images to each other; transmitting the alternative audio or the alternative video or the alternative audio and video and so on, to each other.

When the calling user terminal and the called user terminal are in the state of transmitting the local real-time audio and video currently, the calling user terminal and the called user terminal will respectively transmit the prompt information of the ongoing videophone call to the surroundings at an interval of T1.

The timing module is configured to control the timing of the delay of T0 and the interval of T1.

The timing module is composed of a single timing sub-module and a cycle timing sub-module, and the timing of the delay of T0 is controlled by the single timing sub-module, and timing of the interval of T1 is controlled by the cycle timing sub-module.

The transmitting module is configured to send the prompt information.

The control module is configured to read the duration of the timer and the prompt information configured by the setting module according to the terminal wording state detected by the detecting module, then to control the timing of the timing module according to the read duration of the timer, and to start the transmitting module to transmit the read prompt information.

FIG. 2 illustrates the composition of a timing module in accordance with the present invention, as shown in FIG. 2, the timing module is composed of a single timing sub-module and a cycle timing sub-module. Wherein the single timing module is configured to make the calling user terminal and the called user terminal transmit the local real-time audio and video to each other after a delay of T0 from the beginning of the videophone call, when the detecting module detects that the calling user terminal and the called user terminal are respectively in the state before opening logical audio and video channels and the control module controls the timing module to start timing; the cycle timing sub-module is configured to make the calling user terminal and the called user terminal transmit the prompt information of the ongoing videophone call to the surroundings at an interval of T1 in the videophone call when the detecting module detects that the calling user terminal and the called user terminal are in the state of transmitting local real-time audio and video currently and the control module controls the timing module to start timing.

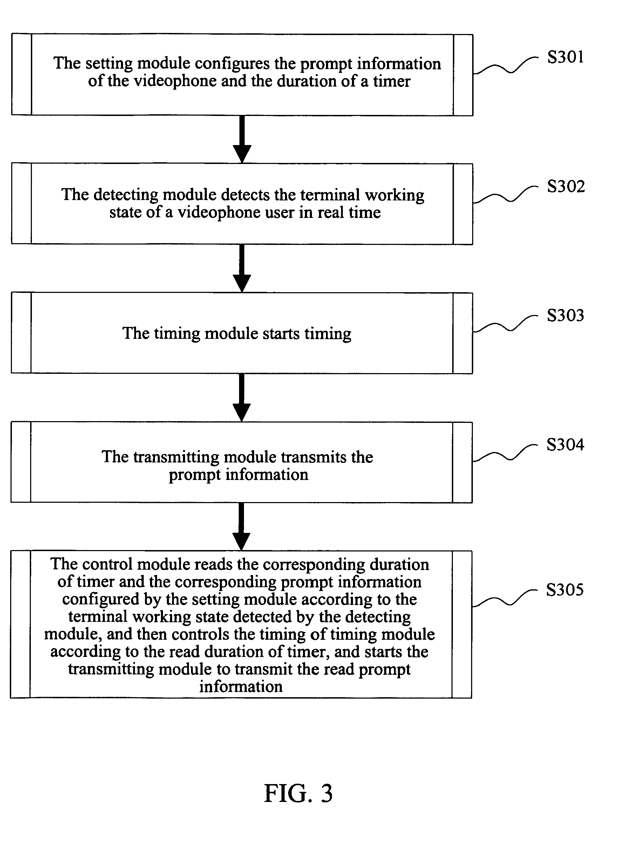

FIG. 3 is a logical flow chart of a method for protecting users' privacy in a videophone call in accordance with the present invention, and as shown in FIG. 3:
in step S301, the setting module configures prompt information of the videophone and the duration of a timer;
in step S302, the detecting module detects the terminal working state of a videophone user in real time;
in step S303, the timing module starts timing;
in step S304, the transmitting module transmits the prompt information;
in step S305, the control module reads the corresponding duration of the timer and the corresponding prompt information configured by the setting module according to the terminal working state detected by the detecting module, then controls the timing of the timing module according to the read duration of the timer, and starts the transmitting module to transmit the read prompt information.

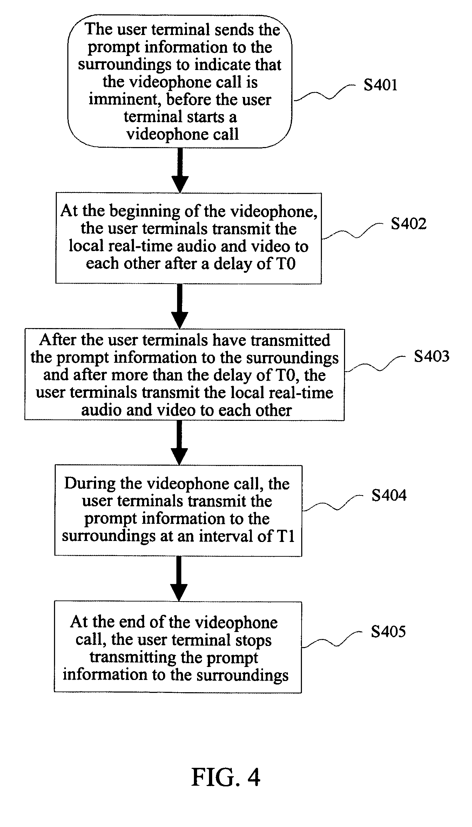

FIG. 4 is a flow chart of a videophone call applying above method in accordance with the present invention, and as shown in FIG. 4:
in step S401, the user terminal sends the prompt information to the surroundings to indicate that the videophone call is imminent, before the user terminal starts a videophone call.

Before starting the videophone call, it might be that the calling user terminal is in the state of playing ring-back tone when the called user terminal is in the ringing state; or, the calling user terminal and the called user terminal are respectively in the state before opening logical audio and video channels; or, the calling user terminal and the called user terminal are in the state before going to transmit the local real-time audio and video images;
wherein, sending the corresponding prompt information refers to using the set prompt information, which distinguishes between the imminent videophone call and the ongoing videophone call, and it is the prompt information of the imminent videophone call herein.

In step S402, at the beginning of the videophone, the user terminals transmit the local real-time audio and video to each other after a delay of T0, and within the T0 time, the user terminals do not transmit the local real-time audio and video to each other.

In step S403, after the user terminals have transmitted the prompt information to the surroundings and after more than the delay of T0, the user terminals transmit the local real-time audio and video to each other.

In step S404, during the videophone call, the user terminals transmit the prompt information corresponding to the current user terminals to the surroundings at an interval of T1.

In step S405, at the end of the videophone call, the user terminal stops transmitting the prompt information to the surroundings.

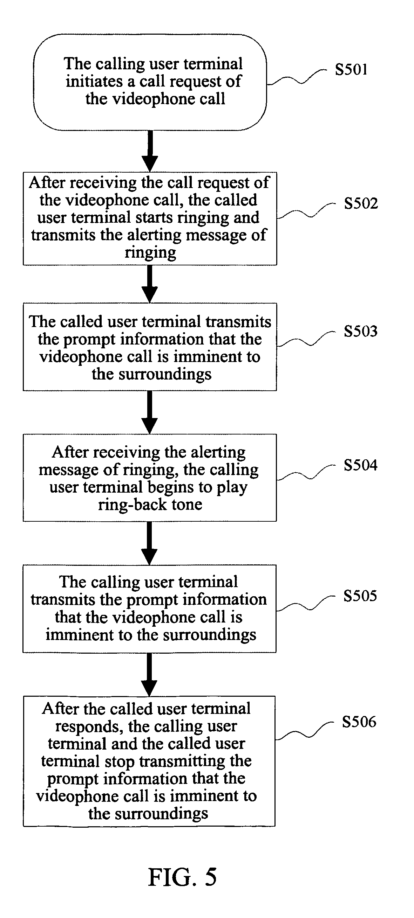

FIG. 5 illustrates a logical flow that the called user terminal is in the ringing state and the calling user terminal is in the state of playing ring-back tone in accordance with an embodiment of the present invention, as shown in FIG. 5:
In step S501, the calling user terminal initiates a call request of the videophone call.
Initiating the call request of the videophone uses the SETUP message defined in Q.931.

In step S502, after receiving the call request of the videophone call, the called user terminal starts ringing and transmits the alerting message of ringing.

The alerting message of ringing is the ALERTING message defmed in Q.931.

In step S503, the called user terminal transmits the prompt information that the videophone call is imminent to the surroundings.

In step S504, after receiving the alerting message of ringing, the calling user terminal begins to play ring-back tone.

In step S505, the calling user terminal transmits the prompt information that the videophone call is imminent to the surroundings.

In step S506, after the called user terminal responds, the calling user terminal and the called user terminal stop transmitting the prompt information that the videophone call is imminent to the surroundings.

After responding, the called user terminal should transmit the response message, that is the CONNECT message defined in Q.931, and after receiving the CONNECT message, the calling user terminal transmits the acknowledgement message to the called user terminal, that is the CONNECT_ACK defined in Q.931.

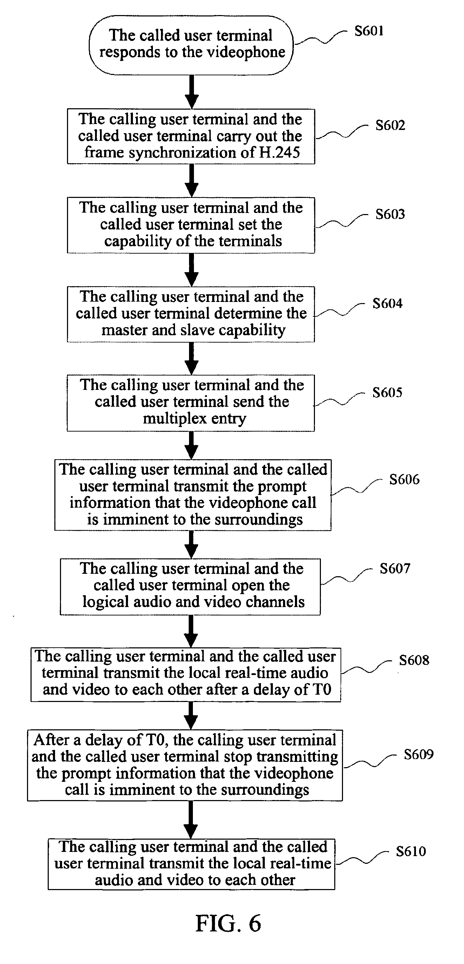

FIG. 6 is a logical flow chart of the calling user terminal and the called user terminal being respectively in the state before opening the logical audio and video channels in accordance with an embodiment of the present invention, and as shown in FIG. 6:
In step S601, the called user terminal responds to the videophone.

After responding, the called user terminal should transmit the response message, that is the CONNECT message defined in Q.931, and after receiving the CONNECT message, the calling user terminal transmits the acknowledgement message to the called user terminal, that is the CONNECT_ACK defined in Q.931.

In step S602, the calling user terminal and the called user terminal carry out the frame synchronization of H.245.

In step S603, the calling user terminal and the called user terminal set the capability of the terminals.

Setting the capability of the terminals is the TerminalCapabilitySet and TerminalCapabilitySetAck defined in the H.245 message.

In step S604, the calling user terminal and the called user terminal determine the master and slave capability.

Determining the master and slave capability is the MasterSlaveDetermination and MasterSlaveDeterminationAck defmed in the H.245 message.

In step S605, the calling user terminal and the called user terminal send the multiplex entry.

Sending the multiplex entry is the MultiplexEntrySend and MultiplexEntrySendAck defined in the H.245 message, and the signaling is used to multiplex and demultiplex the audio and video during the negotiation of the multiplex entry.

In step S606, the calling user terminal and the called user terminal transmit the prompt information that the videophone call is imminent to the surroundings.

In step S607, the calling user terminal and the called user terminal open the logical audio and video channels.

Opening the logical audio and video channels is OpenLogicalChannel and OpenLogicalChannelAck defined in the H.245 message.

In step S608, the calling user terminal and the called user terminal transmit the local real-time audio and video to each other after a delay of T0.

In step S609, after a delay of T0, the calling user terminal and the called user terminal stop transmitting the prompt information that the videophone call is imminent to the surroundings.

In step S610, the calling user terminal and the called user terminal transmit the local real-time audio and video to each other.

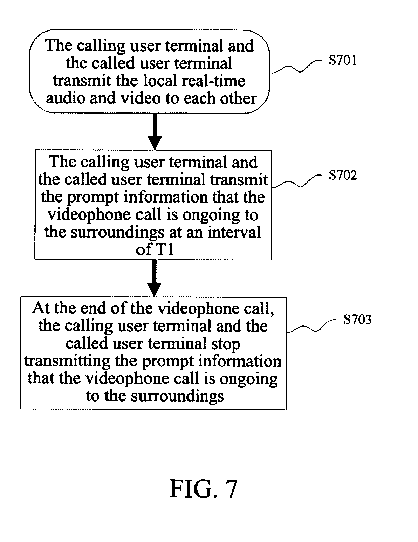

FIG. 7 illustrates a logical flow that the calling user terminal and the called user terminal are in the state of transmitting the local real-time audio and video currently in accordance with an embodiment of the present invention, and as shown in FIG. 7:
In step S701, the calling user terminal and the called user terminal transmit the local real-time audio and video to each other.

In step S702, the calling user terminal and the called user terminal transmit the prompt information that the videophone call is ongoing to the surroundings at an interval of T1.

In step S703, at the end of the videophone call, the calling user terminal and the called user terminal stop transmitting the prompt information that the videophone call is ongoing to the surroundings.

In summary, the present invention has the following technical effect: the present invention takes full advantage of simplicity and easy modification of the terminal software upgrade, and only modifying the terminal software appropriately, the present invention can achieve prompting surrounding people to avoid being photographed in the videophone call, and it can be applicable to various types of terminal devices, therefore mobile phones with function of automatic prompts of the imminent or ongoing videophone call, can be easily implemented, and operators only needs to modify the terminal software of users appropriately.

The above description illustrates the present invention in detail, however, it is not intended to limit the present invention. For those skilled in the field, the present invention can be modified based on the principle of the present invention. All modifications in accordance with the principle of the present invention should belong to the protection scope of the present invention.

### Industrial Applicability

Compared with the existing technology, the present invention achieves prompting surrounding people to avoid the possibility of being photographed in the videophone call, and only the software of the terminal is needed to be modified appropriately, which can be applicable to various types of terminals.

## Claims

1. A device for protecting users' privacy in a videophone call, comprising:
a setting module, which is configured to configure prompt information of a videophone and duration of a timer;
a detecting module, which is configured to detect a terminal working state of a videophone user in real time;
a timing module, which is configured to perform timing;
a transmitting module, which is configured to transmit the prompt information; and
a control module, which is configured to read the duration of the timer and the prompt information configured by the setting module according to the terminal working state detected by the detecting module, and then to control the timing of the timing module according to the read duration of the timer, and to start the transmitting module to transmit the read prompt information.

2. The device for protecting users' privacy in a videophone call of claim 1, wherein the prompt information of the videophone configured by the setting module comprises prompt information that the videophone call is imminent and prompt information that the videophone call is ongoing.

3. The device for protecting users' privacy in a videophone call of claim 2, wherein the terminal working state of the videophone user comprises:
a called user terminal being in a ringing state, a calling user terminal is in a state of playing ring-back tone;
the calling user terminal and the called user terminal being respectively in a state before opening logical audio and video channels; and
the calling user terminal and the called user terminal are in a state of transmitting a local real-time audio and video currently.

4. The device for protecting users' privacy in a videophone call of claim 3, wherein the timing module comprises:
a single timing sub-module, which is configured to make the calling user terminal and the called user terminal transmit the local real-time audio and video to each other after a delay of T0 from the beginning of the videophone call, when the detecting module detects that the calling user terminal and the called user terminal are respectively in the state before opening logical audio and video channels and the control module controls the timing module to start timing; and
a cycle timing sub-module, which is configured to make the calling user terminal and the called user terminal transmit the prompt information of ongoing videophone call to surroundings at an interval of T1 in the videophone call, when the detecting module detects that the calling user terminal and the called user terminal are in the state of transmitting the local real-time audio and video currently and the control module controls the timing module to start timing.

5. A method for protecting users' privacy in a videophone call, comprising following steps of:
configuring prompt information of a videophone and duration of a timer;
detecting a terminal working state of a videophone user in real time;
and
reading the duration of the timer and the prompt information according to the detected terminal working state, then performing timing according to the read duration of the timer, and transmitting the read prompt information.

6. The method for protecting users' privacy in a videophone call of claim 5, wherein the prompt information of the videophone comprises prompt information that the videophone call is imminent and prompt information that the videophone call is ongoing.

7. The method for protecting users' privacy in a videophone call of claim 6, wherein the step of reading the duration of the timer and the prompt information according to the detected terminal working state, then performing timing according to the read duration of the timer and transmitting the read prompt information, comprises:
reading and transmitting the prompt information that the videophone call is imminent, when detecting that a called user terminal is in a ringing state and a calling user terminal is in a state of playing ring-back tone;
reading and transmitting the prompt information that the videophone call is imminent when detecting that the calling user terminal and the called user terminal are respectively in a state before opening logical audio and video channels, and meanwhile reading a delay of T0 and performing timing, and transmitting any data other than a local real-time audio and video to each other within the delay of T0; and
reading and transmitting the prompt information that the videophone call is ongoing when detecting that the calling user terminal and the called user terminal are respectively in a state of transmitting the local real-time audio and video, and meanwhile reading an interval of T1 and performing timing, and transmitting the prompt information that the videophone call is ongoing to surroundings at the interval of T1.

8. The method for protecting users' privacy in a videophone call of claim 7, wherein the step of transmitting any data other than the local real-time audio and video to each other within the delay of T0 comprises: within the delay of T0, not transmitting the local real-time audio and video; or
within the delay of T0, closing a local audio and transmitting alternative images to each other; or
within the delay of T0, transmitting an alternative audio, or an alternative video, or an alternative audio and video to each other.
